(19) Europäisches Patentamt
European Patent Office
Office européen des brevets

(11) **EP 4 481 526 A1**

(12) **EUROPEAN PATENT APPLICATION**
published in accordance with Art. 153(4) EPC

(43) Date of publication:
**25.12.2024 Bulletin 2024/52**

(21) Application number: **23755923.2**

(22) Date of filing: **21.02.2023**

(51) International Patent Classification (IPC):
**G05D 1/02** (2020.01)   **G01C 21/20** (2006.01)

(52) Cooperative Patent Classification (CPC):
**B25J 9/16; G01C 21/20; G05D 1/02**

(86) International application number:
**PCT/CN2023/077432**

(87) International publication number:
**WO 2023/155923 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.02.2022 CN 202210156637**

(71) Applicant: **ZTE Corporation
Shenzhen Guangdong 518057 (CN)**

(72) Inventors:
• **WU, Dan**
  **Shenzhen, Guangdong 518057 (CN)**
• **XIN, Ruishan**
  **Shenzhen, Guangdong 518057 (CN)**

(74) Representative: **Zoli, Filippo
Brunacci & Partners S.r.l.
Via Pietro Giardini, 625
41125 Modena (IT)**

(54) **PATH PLANNING METHOD AND APPARATUS AND READABLE STORAGE MEDIUM**

(57) A path planning method comprises: acquiring a motion space, starting point position, and end point position of a moving object, and obstacle information (S100); in the motion space, constructing a first exploration tree starting from the starting point position, and constructing a second exploration tree starting from the end point position, wherein the first exploration tree and the second exploration tree grow in opposite directions according to the obstacle information (S200); and when the distance between a first tree node grown by the first exploration tree and a second tree node grown by the second exploration tree is not greater than a preset step length, connecting the first exploration tree and the second exploration tree to obtain a planned path of the moving object (S300). The described method can effectively improve the obstacle avoidance effect of a build path and shorten the path planning time. The present application further relates to a path planning apparatus and a computer-readable storage medium.

FIG. 1

## Description

### CROSS-REFERENCE TO RELATED APPLICATION

This application is filed on the basis of Chinese patent application No. 202210156637.4 filed February 21, 2022, and claims priority to the Chinese patent application, the entire contents of which are incorporated herein by reference.

### TECHNICAL FIELD

Embodiments of the present disclosure relate to the technical field of path navigation, and more particularly, to a path planning method and apparatus, and a computer-readable storage medium.

### BACKGROUND

With the advancement of technology, industrial moving objects have developed rapidly. These advancements not only improve production efficiency, but also reduce labor costs, making them widely used in everyday life. Path planning for moving objects such as mechanical arms and robots is a crucial aspect of industrial control. It involves finding a continuous, collision-free path from a starting point to a target point in a configuration space while adhering to environmental constraints and the requirements of the moving objects. Currently, mainstream path planning algorithms are mainly sampling-based planning algorithms, represented by Rapid-exploration Random Tree (RRT). Although these algorithms exhibit strong randomness, they take a long time to construct a path and therefore do not meet the current path planning requirements.

### SUMMARY

The following is a summary of the subject matter set forth in this description. This summary is not intended to limit the scope of protection of the claims.

Embodiments of the present disclosure provide a path planning method and apparatus, and a computer-readable storage medium.

In accordance with a first aspect of the present disclosure, an embodiment provides a path planning method, including: acquiring a motion space, a starting position, and an end position of a moving object, and information of an obstacle; constructing a first exploration tree starting from the starting position and constructing a second exploration tree starting from the end position in the motion space, where the first exploration tree and the second exploration tree grow toward each other according to the information of the obstacle; and in response to a distance between a first tree node grown on the first exploration tree and a second tree node grown on the second exploration tree being not greater than a preset step length, connecting the first exploration tree and the second exploration tree to obtain a planned path of the moving object, where the second tree node is grown in the following manner: selecting a tree node nearest to a target sampling point as a third tree node from a node set of the second exploration tree, and selecting a tree node on the first exploration tree nearest to the second exploration tree as a target tree node, where the target sampling point is obtained by extending sampling along the second tree node previously grown; and in response to a minimum distance between the third tree node and the obstacle being not less than a preset distance threshold, growing a tree node as the second tree node according to a direction from the third tree node to the target sampling point and a direction from the third tree node to the target tree node.

In accordance with a second aspect of the present disclosure, an embodiment provides a path planning apparatus, including: a memory, a processor, and a computer program stored in the memory and executable by the processor, where the computer program, when executed by the processor, causes the processor to carry out the path planning method in accordance with the first aspect.

In accordance with a third aspect of the present disclosure, an embodiment provides a computer-readable storage medium, storing computer-executable instructions which, when executed by a processor, cause the processor to carry out the path planning method in accordance with the first aspect.

Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is a flowchart of a path planning method according to an embodiment of the present disclosure;

FIG. 2 is a flowchart of growing a first tree node in a path planning method according to an embodiment of the present disclosure;

FIG. 3 is a flowchart of constructing a first exploration tree in a path planning method according to an embodiment of the present disclosure;

FIG. 4 is a flowchart of constructing a first exploration tree in a path planning method according to another embodiment of the present disclosure;

FIG. 5 is a flowchart of growing a second tree node in a path planning method according to an embodiment of the present disclosure;

FIG. 6 is a flowchart of growing a second tree node in a path planning method according to another embodiment of the present disclosure;

FIG. 7 is a flowchart of constructing a second exploration tree in a path planning method according to an embodiment of the present disclosure;

FIG. 8 is a flowchart of constructing a second exploration tree in a path planning method according to another embodiment of the present disclosure;

FIG. 9 is a flowchart of obtaining a planned path of a moving object in a path planning method according to an embodiment of the present disclosure;

FIG. 10 is a schematic diagram of growth and extension of the first exploration tree and the second exploration tree according to an embodiment of the present disclosure;

FIG. 11 is a schematic diagram showing comparison between a two-dimensional path determined based on a path planning method provided in an embodiment of the present disclosure and a two-dimensional path determined based on a path planning method in the related technology;

FIG. 12 is a schematic diagram showing comparison between a three-dimensional path determined based on a path planning method provided in an embodiment of the present disclosure and a three-dimensional path determined based on a path planning method in the related technology; and

FIG. 13 is a schematic diagram of a path planning apparatus according to an embodiment of the present disclosure.

**DETAILED DESCRIPTION**

To make the objects, technical schemes, and advantages of the present disclosure clear, the present disclosure is described in further detail in conjunction with accompanying drawings and examples. It should be understood that the embodiments described herein are merely for illustrative purposes and are not intended to limit the scope of the present disclosure.

It should be noted that, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first," "second," and the like in the description, the claims, and the accompanying drawings are used to distinguish similar objects, and are not necessarily indicate a specific sequence or a precedence order

The present disclosure provides a path planning method and apparatus, and a computer-readable storage medium. A path planning space is sought by growing a first exploration tree and a second exploration tree toward each other, and a planned path of a moving object is obtained by connecting the first exploration tree and the second exploration tree. As such, an obstacle avoidance effect of the constructed path can be effectively improved. In addition, considering the influence of distances relative to an obstacle, tree nodes of the exploration trees are constructed through a combination of random learning and targeted learning, so that random and targeted growth of tree nodes can be balanced, and the possibility of collision between the generated tree nodes and the obstacle can be effectively reduced. Therefore, the exploration trees can converge to the target more quickly, thereby reducing the path planning time, obtaining a more optimized continuous collision-free path, and meeting the path planning requirements.

The embodiments of the present disclosure will be further described in detail below in conjunction with the accompanying drawings.

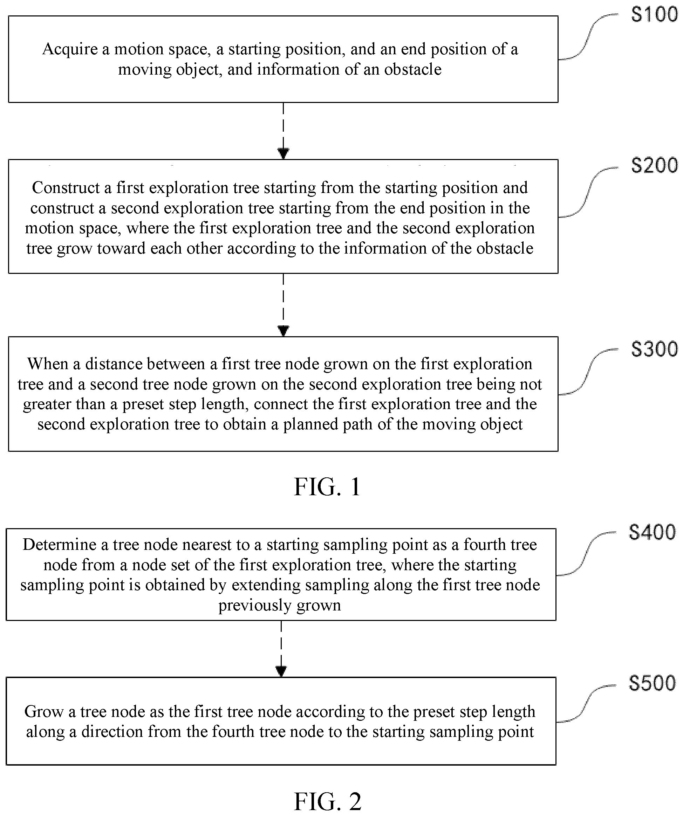

FIG. 1 is a flowchart of a path planning method according to an embodiment of the present disclosure. The path planning method includes, but not limited to, the following steps of S100 to S300.

At S100, a motion space, a starting position, and an end position of a moving object, and information of an obstacle are acquired.

In an embodiment, the starting position and the end position of the moving object are respectively a starting point and an end point of a planned path to be constructed, and may be expressed in two dimensions, three dimensions, or even more dimensions. The motion space of the moving object represents a space for movement of the moving object, and is used for constraining an overall range of the planned path to be constructed, such that the moving object will not move out of the motion space of the moving object. The motion space may be expressed in two dimensions, three dimensions, or even more dimensions. The obstacle corresponds to the moving object, and hinders the movement of the moving object. One of requirements for designing the planned path is to avoid the obstacle. Therefore, the acquisition of the information of the obstacle can provide a basis for collision detection for tree nodes to be grown, such that a planned path meeting the requirements can be designed.

It can be understood that the moving object may be of various types, and all intelligent objects commonly used in the industrial field that need to move may be used as the moving object in this embodiment. For example, the moving object may be, but not limited to, a mechanical arm, a robot, a machine-controlled vehicle, etc. The moving object may be selected and set in related application scenarios, which is not limited in this embodiment.

At S200, a first exploration tree starting from the starting position is constructed and a second exploration tree starting from the end position is constructed in the motion space, where the first exploration tree and the second exploration tree grow toward each other according to the information of the obstacle.

The second tree node grown on the second exploration tree may be grown, without limitation, in the following manner:

selecting a tree node nearest to a target sampling point as a third tree node from a node set of the second exploration tree, and selecting a tree node on the first exploration tree nearest to the second exploration tree as a target tree node, where the target sampling point is obtained by extending sampling along the second tree node previously grown; and

when a minimum distance between the third tree node and the obstacle is not less than a preset distance threshold, growing a tree node as the second tree node according to a direction from the third tree node to the target sampling point and a direction from the third tree node to the target tree node.

In an embodiment, considering the influence of distances relative to an obstacle, tree nodes of the exploration trees are constructed through a combination of random learning and targeted learning, such that random and targeted growth of tree nodes can be balanced, and the possibility of collision between the generated tree nodes and the obstacle can be effectively reduced. Therefore, the exploration trees can converge to the target more quickly, reducing the path planning time, obtaining a more optimized continuous collision-free path, and meeting the path planning requirements.

It can be understood that the first exploration tree is gradually extended starting from the starting position toward the second exploration tree to grow first tree nodes, and the second exploration tree is gradually extended starting from the end position toward the first exploration tree to grow second tree nodes, i.e., a plurality of first tree nodes and a plurality of second tree nodes are obtained by gradually extending the exploration trees. A set formed by the plurality of first tree nodes is the node set of the first exploration tree, and a set formed by the plurality of second tree nodes is the node set of the second exploration tree. Correspondingly, there may also be a plurality of target sampling points, and each target sampling point is obtained by extending sampling along the second tree node previously grown. As such, the two exploration trees can continuously grow alternately toward each other to achieve convergence. This process may be regarded as continuous growth of a whole growing tree. When a related condition is satisfied, it may be determined that the growth of the growing tree is complete, and a planned path of the moving object can be obtained based on the growing tree.

It should be noted that the growth may start from the first exploration tree or the second exploration tree, which is not limited in the embodiments of the present disclosure. If it is necessary to continue to grow the second exploration tree after the second tree node is generated, the current second tree node obtained is used as a basis for growing a next second tree node, i.e., the growth of the second exploration tree may be performed cyclically. For example, the current target sampling point is obtained by extending sampling along the end position. Similarly, a next target sampling point may be obtained by extending sampling based on the current second tree node obtained. A next second tree node may also be grown in a similar manner. It can be understood that the first tree node may also be grown cyclically, and the details will not be repeated here. Through the cyclic and alternating growth in the above process, a first exploration tree and a second exploration tree that meet the requirements can be obtained finally.

In an embodiment, obtaining of the target sampling point by extending sampling along the end position may be implemented in various manners, which may be selected by those having ordinary skills in the art according to an application scenario. For example, in an obstacle-free region, random sampling may be performed based on a target offset, i.e., a uniform probability P may be generated in advance according to a uniform probability distribution. When P is less than a first preset probability threshold, the target sampling point $x_{rand}$ is equal to the current target point, i.e., the target tree node is selected as the target sampling point $x_{rand}$; otherwise, the target sampling point $x_{rand}$ is randomly selected from a range of a motion space extended along the second tree node previously grown. The target sampling point $x_{rand}$ is generated based on the following formula:

$$x_{rand} = \begin{cases} Uniform(x_{goal}), P < gais \\ Uniform(x_{free}), otherwise \end{cases};$$

where *Uniform* $(\cdot)$ represents a uniform sampling function, P represents a random number in a range of [0, 1], *gais* represents a target offset probability value, which may be set to, for example, but not limited to, 0.05, $x_{goal}$ represents a target solution space, and $x_{free}$ represents the motion space of the moving object.

It can be understood that a target node currently grown on the second exploration tree is a tree node on the first exploration tree currently nearest to the second exploration tree, so the target tree node of the second exploration tree can be determined according to the tree node currently grown on the first exploration tree. A detailed description will be given below through implementations.

In an embodiment, the minimum distance between the third tree node and the obstacle represents a relative position relationship between the corresponding nearest neighbor node and the obstacle. When the minimum distance between the third tree node and the obstacle is not less than the preset distance threshold, it indicates that the nearest neighbor node is located in a region far away from the obstacle. In this case, a targeted learning aspect of the newly grown node, i.e., a targeted learning part along the direction from the third tree node to the target tree node, may be increased, while keeping a random learning aspect of the newly grown node, i.e., a random learning part along the direction from the third tree node to the target sampling point, such that the newly grown node quickly converges to the target. As such, the convergence speed can be improved, allowing the moving object to successfully avoid the obstacle and quickly reach the target.

It can be understood that the values of the preset distance threshold and the first preset probability threshold are not limited, and may be set based on, for example, but not limited to, the information of the obstacle, the motion space of the moving object, etc., depending on an actual application scenario, which is not limited in this embodiment.

In an implementation shown in FIG. 2, the first tree node grown on the first exploration tree may be grown, without limitation, in the following manner:

At S400, a tree node nearest to a starting sampling point is determined as a fourth tree node from a node set of the first exploration tree, where the starting sampling point is obtained by extending sampling along the first tree node previously grown.

At S500, a tree node is grown as the first tree node according to the preset step length along a direction from the fourth tree node to the starting sampling point.

In an embodiment, the starting sampling point is obtained by sampling, and then a neighbor node nearest to the starting sampling point is determined as the fourth tree node from the node set of the first exploration tree, such that the first exploration tree can be randomly grown along the direction from the fourth tree node to the starting sampling point to obtain the corresponding first tree node, i.e., the first tree node is determined by random growth, such that the constructed planned path has probability completeness.

In an embodiment, the starting sampling point may be generated in an obstacle-free region by executing, for example, but not limited to, the following steps: generating a starting sampling probability according to a uniform probability distribution; when the starting sampling probability is less than a second preset probability threshold, selecting a starting tree node as the starting sampling point from the node set of the second exploration tree, where the starting tree node is a tree node on the second exploration tree nearest to the first exploration tree; and when the starting sampling probability is greater than or equal to the second preset probability threshold, randomly selecting the starting sampling point from a range of a motion space extended along the first tree node previously grown. It can be understood that the acquisition of the

EP 4 481 526 A1

starting sampling point and the acquisition of the target sampling point are similar and based on the same principle, and because the acquisition of the target sampling point has been described in detail in the above embodiments, the details will not be repeated here to avoid redundancy.

It can be understood that the preset step length is a length between two tree nodes grown in sequence on the exploration tree, and the value of the preset step length is not be limited herein and may be selected by those having ordinary skills in the art in an actual application scenario. In some scenarios, after the preset step length is determined, all tree nodes in the first exploration tree and the second exploration tree may be grown according to the preset step length.

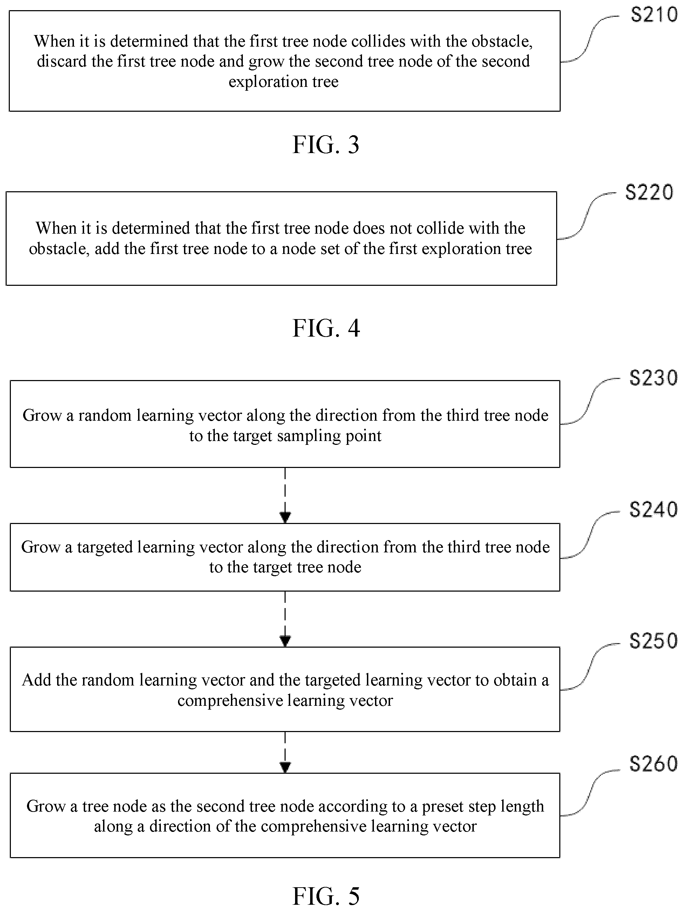

In an implementation shown in FIG. 3, "constructing a first exploration tree starting from the starting position" in S200 includes, but not limited to, a following step of S210.

At S210, when it is determined that the first tree node collides with the obstacle, the first tree node is discarded and the second tree node of the second exploration tree is grown.

In an embodiment, when it is determined that the first tree node collides with the obstacle, it indicates that the currently grown first tree node does not meet the path requirement. In this case, the first tree node is discarded and is not to be used as a part of the first exploration tree, and at the same time, the second tree node is grown on the second exploration tree. As such, the alternating growth of the first exploration tree and the second exploration tree toward each other is realized.

In an implementation shown in FIG. 4, "constructing a first exploration tree starting from the starting position" in S200 further includes, but not limited to, a following step of S220.

At S220, when it is determined that the first tree node does not collide with the obstacle, the first tree node is added to a node set of the first exploration tree.

In an embodiment, when it is determined that the first tree node does not collide with the obstacle, it indicates that the currently grown first tree node meets the path requirement. In this case, the currently grown first tree node may be kept and added to the node set of the first exploration tree as a part of the first exploration tree, and the growth of the first exploration tree can be continued along the first tree node until there is a first tree node colliding with the obstacle. As such, the growth and extension of the first exploration tree can be realized.

In an embodiment, whether the first tree node collides with the obstacle may be determined in various manners. For example, it may first be determined whether the generated first tree node is within a position range of the obstacle. If the generated first tree node is not within the position range of the obstacle, it may be further determined whether a line connecting the nearest neighbor node and the generated first tree node collides with the obstacle. If yes, the line connecting the nearest neighbor node and the generated first tree node collides with the obstacle, the generated first tree node is discarded and the second exploration tree is grown; otherwise, the first tree node is added to the node set of the first exploration tree as a part of the first exploration tree, i.e., as a part of the planned path.

In an implementation shown in FIG. 5, "growing a tree node as the second tree node according to a direction from the third tree node to the target sampling point and a direction from the third tree node to the target tree node" in S200 includes, but not limited to, the following steps of S230 to S260.

At S230, a random learning vector is grown along the direction from the third tree node to the target sampling point.

At S240, a targeted learning vector is grown along the direction from the third tree node to the target tree node.

At S250, the random learning vector and the targeted learning vector are added to obtain a comprehensive learning vector.

At S260, a tree node is grown as the second tree node according to a preset step length along a direction of the comprehensive learning vector.

In an embodiment, with reference to Particle Swarm Optimization (PSO), a random learning vector is grown along the direction from the third tree node to the target sampling point, which is equivalent to growing a random learning node along the direction from the third tree node to the target tree node, and a targeted learning vector is grown along the direction from the third tree node to the target tree node, which is equivalent to growing a targeted learning node along the direction from the third tree node to the target tree node. In other words, the second tree node is grown based on the third tree node by a combination of random learning and targeted learning. As such, not only the advantage of strong randomness of RRT is inherited, but also the advantage of high convergence speed of PSO is achieved. In this way, the second exploration tree can be grown toward the target node more quickly, and the length of the planned path can be reduced.

In an embodiment, the generated second tree node takes into consideration both the influence of the random learning vector and the influence of the targeted learning vector. Therefore, as reflected on the actual construction path, the direction from the third tree node to the second tree node lies between the direction from the third tree node to the target sampling point and the direction from the third tree node to the target tree node. Therefore, it can be seen that the distance between nearest neighbor nodes of the two exploration trees is shortened, such that the length of the planned path can be reduced.

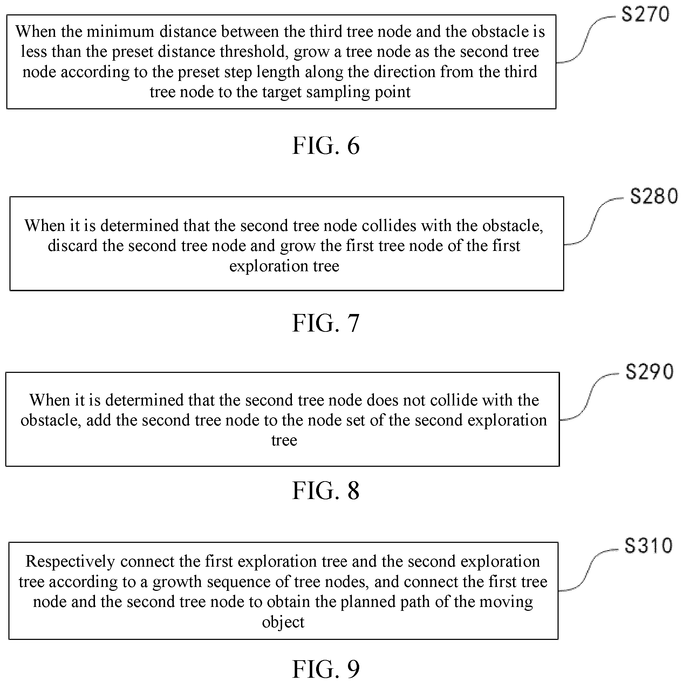

In an implementation shown in FIG. 6, the second tree node may further be grown, without limitation, in the following manner:

At S270, when the minimum distance between the third tree node and the obstacle is less than the preset distance threshold, a tree node is grown as the second tree node according to the preset step length along the direction from the third tree node to the target sampling point.

In an embodiment, the minimum distance between the third tree node and the obstacle represents a relative position relationship between the corresponding nearest neighbor node and the obstacle. When the minimum distance between the third tree node and the obstacle is less than the preset distance threshold, it indicates that the nearest neighbor node is located in a region near the obstacle. In this case, a random learning aspect of the newly grown node, i.e., a random learning part along the direction from the third tree node to the target sampling point may be increased, such that the newly grown node quickly converges to the target. As such, the convergence speed can be improved, allowing the moving object to successfully avoid the obstacle and quickly reach the target.

In an implementation shown in FIG. 7, "constructing a second exploration tree starting from the end position" in S200 includes, but not limited to, a following step of S280.

At S280, when it is determined that the second tree node collides with the obstacle, the second tree node is discarded and the first tree node of the first exploration tree is grown.

In an embodiment, when it is determined that the second tree node collides with the obstacle, it indicates that the currently grown second tree node does not meet the path requirement. In this case, the second tree node is discarded and is not to be used as a part of the second exploration tree, and at the same time, the first tree node is grown on the first exploration tree. As such, the alternating growth of the first exploration tree and the second exploration tree toward each other is realized.

In an implementation shown in FIG. 8, "constructing a second exploration tree starting from the end position" in S200 further includes, but not limited to, a following step of S290.

At S290, when it is determined that the second tree node does not collide with the obstacle, the second tree node is added to the node set of the second exploration tree.

In an embodiment, when it is determined that the second tree node does not collide with the obstacle, it indicates that the currently grown second tree node meets the path requirement. In this case, the currently grown second tree node may be kept and added to the node set of the second exploration tree as a part of the second exploration tree, and the growth of the second exploration tree can be continued along the second tree node until there is a second tree node colliding with the obstacle. As such, the growth and extension of the second exploration tree can be realized.

In an embodiment, whether the second tree node collides with the obstacle may be determined in various manners. For example, it may first be determined whether the generated second tree node is within a position range of the obstacle. If the generated second tree node is not within the position range of the obstacle, it may be further determined whether a line connecting the nearest neighbor node and the generated second tree node collides with the obstacle. If yes, the line connecting the nearest neighbor node and the generated second tree node collides with the obstacle, the generated second tree node is discarded and the first exploration tree is grown; otherwise, the second tree node is added to the node set of the second exploration tree as a part of the second exploration tree, i.e., as a part of the planned path.

At S300, when a distance between a first tree node grown on the first exploration tree and a second tree node grown on the second exploration tree is not greater than a preset step length, the first exploration tree and the second exploration tree are connected to obtain a planned path of the moving object.

In an embodiment, a path planning space is sought by growing a first exploration tree and a second exploration tree toward each other, and a planned path of a moving object is obtained by connecting the first exploration tree and the second exploration tree. As such, the obstacle avoidance effect of the constructed path can be effectively improved. In addition, considering the influence of distances relative to an obstacle, tree nodes of the exploration trees are constructed through a combination of random learning and targeted learning, such that random and targeted growth of tree nodes can be balanced, and the possibility of collision between the generated tree nodes and the obstacle can be effectively reduced. Therefore, the exploration trees can converge to the target more quickly, reducing the path planning time, obtaining a more optimized continuous collision-free path, and meeting the path planning requirements.

In an implementation shown in FIG. 9, S300 includes, but not limited to, a following step of S310.

At S310, the first exploration tree and the second exploration tree are respectively connected according to a growth sequence of tree nodes, and the first tree node and the second tree node are connected to obtain the planned path of the moving object.

In an embodiment, when it is determined that the distance between the first tree node and the second tree node is not greater than the preset step length, the first tree nodes grown in sequence on the first exploration tree according to the extension order are connected, and the second tree nodes grown in sequence on the second exploration tree according to the extension order are connected, and finally the nearest nodes between the two exploration trees are connected, i.e., the first tree node and the second tree node between which the distance is the smallest are connected, to obtain a continuous collision-free planned path.

Specific implementations are given below to illustrate the operating principles and procedures of the foregoing embodiments.

Implementation One:

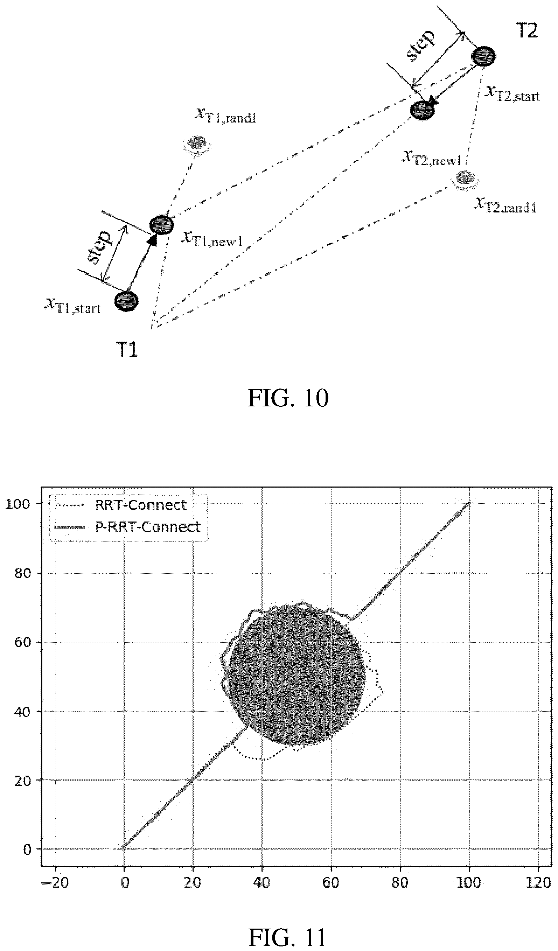

FIG. 10 is a schematic diagram of growth and extension of the first exploration tree and the second exploration tree according to an embodiment of the present disclosure. FIG. 10 shows a schematic diagram under two-dimensional conditions. This implementation will be described using a two-dimensional extension and growth case as an example, and other cases under three-dimensional or more-dimensional conditions can be deduced by analogy.

With reference to the implementation shown in FIG. 10, using a mechanical arm as an example, the path planning method provided in the present disclosure may be executed according to the following procedure.

First, definitions involved in construction of a path are set, including a motion space, a starting position, and a target position of the mechanical arm, and information of an obstacle.

Then, a first exploration tree T1 and a second exploration tree T2 are determined. Random sampling may be adding a target offset on the basis of Rapid-exploration Random Tree Connect (RRT-Connect). The starting position of the mechanical arm is used as a starting node $\chi_{T1,start}$ of T1 and $\chi_{T1,start}$ is added to a node set E1 of T1. The target position $x_{goal}$ is used as a starting node $\chi_{T2,start}$ of T2, and $\chi_{T2,start}$ is added to a node set E2 of T2.

1) A Tree is grown, which is a tree that is currently growing. First, Tree is set to T1.

A process of growing T1 includes the following steps of 1 to 4.

At step 1, a starting sampling point is generated in a collision-free environment, as shown by $\chi_{T1,rand1}$ in FIG. 10, and random sampling is performed based on the target offset, i.e., a uniform probability P1 is generated in advance. When P1 is less than a threshold, the starting sampling point $\chi_{T1,rand1}$ is equal to the current target point; otherwise, the starting sampling point $\chi_{T1,rand1}$ is randomly selected from a range of a motion space extended along the first tree node previously grown.

At step 2, as shown in FIG. 10, a neighbor node $\chi_{nearest1}$ nearest to $\chi_{T1,rand1}$ is found from the node set of Tree according to Euclidean distances. Because the neighbor node nearest to $\chi_{T1,rand1}$ is $\chi_{T1,start}$, $\chi_{T1,start}$ may be determined as $\chi_{nearest1}$. A related function for measuring a Euclidean distance is as follows:

$$\rho(x_1, x_2) = \|x_2 - x_1\|;$$

where $x_1$ and $x_2$ represent any two nodes in Tree, and $\rho(x_1,x_2)$ represents the distance between $x_1$ and $x_2$.

At step 3, a new node $\chi_{T1,new1}$ is generated along a direction from $\chi_{nearest1}$ to $\chi_{T1,rand1}$ according to a step length.

At step 4, collision detection is performed for the new node $\chi_{T1,new1}$. If it is determined that the new node $\chi_{T1,new1}$ does not collide with the obstacle, $\chi_{T1,new1}$ is added to the node set of Tree; otherwise, this node is discarded.

2) Tree is changed to T2 for growth, including the following steps of 5 to 9.

At step 5, a target sampling point is generated in the collision-free environment, as shown by $\chi_{T2,rand1}$ in FIG. 10, and random sampling is performed based on the target offset, i.e., a uniform probability P2 is generated in advance. When P2 is less than a threshold, the target sampling point $\chi_{T2,rand1}$ is equal to the current target point; otherwise, the target sampling point $\chi_{T2,rand1}$ is randomly selected from a range of a motion space extended along the second tree node previously grown.

At step 6, as shown in FIG. 10, a neighbor node $\chi_{nearest2}$ nearest to $\chi_{T2,rand1}$ is found from the node set of Tree according to Euclidean distances. Because the neighbor node nearest to $\chi_{T2,rand1}$ is $\chi_{T2,start}$, $\chi_{T2,start}$ may be determined as $\chi_{nearest2}$.

At step 7, a distance $d$ from $\chi_{nearest2}$ to a nearest obstacle is determined. When the distanfce is greater than a preset threshold $d_{min}$, a new node $\chi_{T2,new1}$ is generated according to PSO; otherwise, another new node is randomly generated.

As shown in FIG. 10, the distance d from $\chi_{nearest2}$ to the nearest obstacle is calculated. If the distancd is less than $d_{min}$, randomness is increased, and a new node is generated along $\chi_{T2,rand1}$ according to a step length. If the distance is greater than $d_{min}$, a new node $\chi_{T2,new1}$ is extended and grown through random learning and targeted learning parts with reference to self-learning and social learning of PSO, and grown along the new node $\chi_{T2,new1}$ according to a step length, i.e., $\chi_{T2,new1}$ includes a ($\chi_{T2,rand1}$-$\chi_{T2,start}$) random learning part and a ($\chi_{T1,new1}$-$\chi_{T2,start}$) targeted learning part. A calculation formula is as follows:

$$x_{\text{new}} = \begin{cases} x_{nearest} + \Delta t \dfrac{x_{rand} - x_{nearest}}{\left\| x_{rand} - x_{nearest} \right\|}, d < d_{\min} \\ x_{nearest} + c1 * r1(x_{rand} - x_{nearest}) + c2 * r2(x'_{goal} - x_{nearest}), otherwise \end{cases}$$

;

where the value of $d_{min}$ is related to the size of the obstacle, $\Delta t$ represents a preset step length step, c 1 and c2 represent acceleration factors, and $x'_{goal}$ represents the target tree nodes of Tree, i.e., the target node $\chi_{T1,new1}$ currently grown on the first exploration tree, which is a target tree node of the second exploration tree nearest to the first exploration tree.

At step 8, collision detection is performed for the new node $\chi_{T2,new1}$. If it is determined that the new node $\chi_{T2,new1}$ does not collide with the obstacle, $\chi_{T2,new1}$ is added to the node set of Tree; otherwise, this node is discarded. Then, the steps 1 to 4 are repeated.

At step 9, it is determined whether the distance between nearest neighbor nodes of the two exploration trees is less than or equal to the preset step length. If the distance between nearest neighbor nodes of the two exploration trees is less than or equal to the preset step length, the two exploration trees may be connected to output a collision-free path from the starting position to the target position; otherwise, step 3 is repeated to continue growing of Tree until an end condition is satisfied to exit the loop, to finally output a collision-free path from the starting position to the target position for the mechanical arm.

It can be understood that in addition to having advantages over RRT and improved RRT-Connect, path planning based on Particle-swarm Rapid-exploration Random Tree Connect (P-RRT-Connect) in this implementation has satisfactory probability completeness even compared with commonly used search-based planning algorithms represented by A* algorithm and heuristic planning algorithms represented by genetic algorithm, can avoid local optimum, and can achieve faster convergence to the target. In this way, an effective obstacle avoidance capability is ensured, and the convergence speed is improved, enabling the mechanical arm to successfully avoid obstacles and reach the target quickly.

In order to better prove the effects of application of the above embodiments, test results will be given below for comparison and description.

Implementation Two:

FIG. 11 is a schematic diagram showing comparison between a path determined based on a path planning method provided in an embodiment of the present disclosure and a path determined based on a path planning method in the related technology in a two-dimensional space example. FIG. 11 shows a schematic diagram of an example under two-dimensional conditions, where RRT-Connect is used as an example of a path planning method in the related technology.

As shown in FIG. 11, a starting position of an end of a mechanical arm is set to (0, 0), a target position of the end of the mechanical arm is set to (100, 100), boundaries of the environment are set to $x \in$ [-20, 120] and yE[-20, 120], coordinates of an obstacle are set to (50, 50), and a radius of the obstacle is set to 20. Table 1 below shows a comparison of parameters.

Table 1. Comparison of path-related parameters of P-RRT-Connect and RRT-Connect in two-dimensional space example

| Algorithm used | Computation time (ms) | Path length | Number of nodes on the path |
| --- | --- | --- | --- |
| RRT-Connect | 1.65 | 176 | 250 |
| P-RRT-Connect | 1.35 | 171 | 243 |

In order to prove the effectiveness and feasibility of P-RRT-Connect adopted in the present disclosure, P-RRT-Connect and RRT-Connect are applied to the two-dimensional space example, and are each repeatedly run 100 times. The average values of the computation time, path length, and number of nodes on the path of the algorithms are compared under the condition of the same search step length. It can be seen from Table 1 that the computation time, path length, and number of nodes on the path of P-RRT-Connect in the present disclosure are less than those of RRT-Connect in the related technology. The average path planning time of P-RRT-Connect is about 18% less than that of RRTConnect, the average path length of P-RRT-Connect is about 2% less than that of RRT-Connect, and the average number of nodes on the path of P-RRT-Connect is about 2% less than that of RRT-Connect, showing that P-RRT-Connect has a higher optimum seeking capability, convergence speed, and feasibility than RRT-Connect.

Implementation Three:

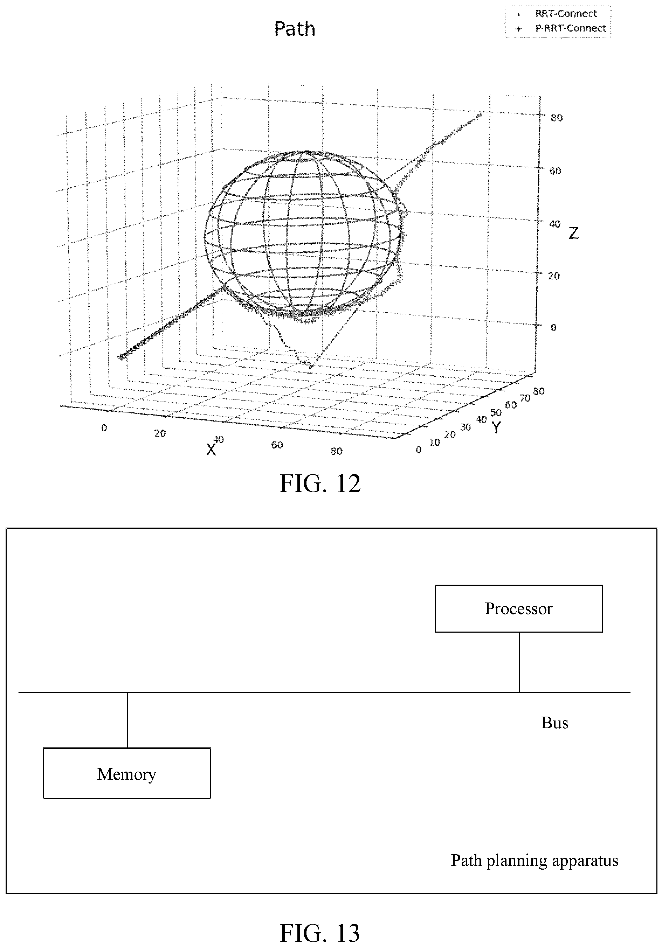

FIG. 12 is a schematic diagram showing comparison between a path determined based on a path planning method provided in an embodiment of the present disclosure and a path determined based on a path planning method in the related technology in a three-dimensional space example. FIG. 12 shows a schematic diagram of an example under three-dimensional conditions, where RRT-Connect is used as an example of a path planning method in the related technology.

As shown in FIG. 12, a starting position of an end of a mechanical arm is set to (0, 0, 0), a target position of the end of the mechanical arm is set to (80, 80, 80), and boundaries of the environment are set to xE[-20, 100], ye[-20, 100], and zE [-20, 100], coordinates of an obstacle are set to (40, 40, 40), and a radius of the obstacle is set to 30. Table 2 below shows a comparison of parameters.

Table 2. Comparison of path-related parameters of P-RRT-Connect and RRT-Connect in three-dimensional space example

| Algorithm used | Computation time (ms) | Path length | Number of nodes on the path |
| --- | --- | --- | --- |
| RRT-Connect | 2.9 | 225 | 172 |
| P-RRT-Connect | 2.0 | 190 | 145 |

In order to prove the effectiveness and feasibility of P-RRT-Connect adopted in the present disclosure, P-RRT-Connect and RRT-Connect are applied to the three-dimensional space example, and are each repeatedly run multiple times. The average values of the computation time, path length, and number of nodes on the path of the algorithms are compared under the condition of the same search step length. It can be seen from Table 2 that the computation time, path length, and number of nodes on the path of P-RRT-Connect in the present disclosure are less than those of RRT-Connect in the related technology. The average path planning time of P-RRT-Connect is about 25% less than that of RRTConnect, the average path length of P-RRT-Connect is about 20% less than that of RRTConnect, and the average number of nodes on the path of P-RRT-Connect is about 12% less than that of RRT-Connect, showing that P-RRT-Connect has a higher optimum seeking capability, convergence speed, and feasibility than RRT-Connect.

In view of the above, the following conclusions can be drawn from the embodiments and implementations.

In the present disclosure, path planning is implemented based on P-RRT-Connect. Two RRT trees are respectively grown starting from the starting position and the end position of the moving object to search the state space. New nodes are grown based on a combination of random learning and targeted learning, such that the convergence speed can be increased and the path length can be reduced. In addition, the distance from the newly grown node to the nearest obstacle is calculated, such that the number of times of collision of the newly grown node can be effectively reduced. In this way, the planning time is reduced, and a short optimized path can be quickly planned for the moving object. Therefore, the path planning method of the present disclosure has the following characteristics:

Rationality: the determined path can fulfill the obstacle avoidance task, and each planning result returned by the algorithm can be tracked and executed by the moving object.

Probability completeness: if there is a continuous collision-free path from the starting point to the end point in the search space, the present disclosure surely can return a reasonable planned path provided that the planning time is long enough.

Optimized performance: the present disclosure has higher path planning performance than the planning method in the related technology in terms of computation time, path length, and number of nodes created.

In addition, referring to FIG. 13, an embodiment of the present disclosure provides a path planning apparatus, including a memory, a processor, and a computer program stored in the memory and executable by the processor.

The processor and the memory may be connected by a bus or in other ways.

The non-transitory software program and instructions required to carry out the path planning method of the foregoing embodiments are stored in the memory which, when executed by the processor, cause the processor to carry out the path planning method of the foregoing embodiments, for example, carry out the method step S100 to S300 in FIG. 1, the method steps S400 to S500 in FIG. 2, the method step S210 in FIG. 3, the method step S220 in FIG. 4, the method steps S230 to S260 in FIG. 5, the method step S270 in FIG. 6, the method step S280 in FIG. 7, the method step S290 in FIG. 8, or the method step S310 in FIG. 9.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by a processor or controller, for example, by a processor in the device embodiment described above, may cause the processor to carry out the path planning method of the foregoing embodiments, for example, carry out the method step S100 to S300 in FIG. 1, the method steps S400 to S500 in FIG. 2, the method step S210 in FIG. 3, the method step S220 in FIG. 4, the method steps S230 to S260 in FIG. 5, the method step S270 in FIG. 6, the method step S280 in FIG. 7, the method step S290 in FIG. 8, or the method step S310 in FIG. 9.

The embodiments of the present disclosure include: acquiring a motion space, a starting position, and an end position of a moving object, and information of an obstacle; constructing a first exploration tree starting from the starting position and constructing a second exploration tree starting from the end position in the motion space, where the first exploration tree and the second exploration tree grow toward each other according to the information of the obstacle; and when a distance between a first tree node grown on the first exploration tree and a second tree node grown on the second exploration tree is not greater than a preset step length, connecting the first exploration tree and the second exploration tree to obtain a planned path of the moving object, where the second tree node is grown in the following manner: selecting a tree node nearest to a target sampling point as a third tree node from a node set of the second exploration tree, and selecting a tree node on the first exploration tree nearest to the second exploration tree as a target tree node, where the target sampling point is obtained by extending sampling along the second tree node previously grown; and when a minimum distance between the third tree node and the obstacle is not less than a preset distance threshold, growing a tree node as the second tree node according to a direction from the third tree node to the target sampling point and a direction from the third tree node to the target tree node. According to the scheme provided in the embodiments of the present disclosure, a path planning space is sought by growing a first exploration tree and a second exploration tree toward each other, and a planned path of a moving object is obtained by connecting the first exploration tree and the second exploration tree. As such, the obstacle avoidance effect of the constructed path can be effectively improved. In addition, considering the influence of distances relative to an obstacle, tree nodes of the exploration trees are constructed through a combination of random learning and targeted learning, such that random and targeted growth of tree nodes can be balanced, and the possibility of collision between the generated tree nodes and the obstacle can be effectively reduced. Therefore, the exploration trees can converge to the target more quickly, thereby reducing the path planning time, obtaining a more optimized continuous collision-free path, and meeting the path planning requirements.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to these implementations. Those having ordinary skill in the art can make various equivalent modifications or replacements without departing from the scope of protection of the present disclosure. Such equivalent modifications or replacements fall within the scope defined by the claims of the present disclosure.

## Claims

1. A path planning method, comprising:

   acquiring a motion space, a starting position, and an end position of a moving object, and information of an obstacle;

constructing a first exploration tree starting from the starting position and constructing a second exploration tree starting from the end position in the motion space, wherein the first exploration tree and the second exploration tree grow toward each other according to the information of the obstacle; and

in response to a distance between a first tree node grown on the first exploration tree and a second tree node grown on the second exploration tree being not greater than a preset step length, connecting the first exploration tree and the second exploration tree to obtain a planned path of the moving object,

wherein the second tree node is grown in the following manner:

selecting a tree node nearest to a target sampling point as a third tree node from a node set of the second exploration tree, and selecting a tree node on the first exploration tree nearest to the second exploration tree as a target tree node, wherein the target sampling point is obtained by extending sampling along the second tree node previously grown; and

in response to a minimum distance between the third tree node and the obstacle being not less than a preset distance threshold, growing a tree node as the second tree node according to a direction from the third tree node to the target sampling point and a direction from the third tree node to the target tree node.

2. The path planning method of claim 1, wherein growing a tree node as the second tree node according to a direction from the third tree node to the target sampling point and a direction from the third tree node to the target tree node comprises:

growing a random learning vector along the direction from the third tree node to the target sampling point;
growing a targeted learning vector along the direction from the third tree node to the target tree node;
adding the random learning vector and the targeted learning vector to obtain a comprehensive learning vector; and
growing a tree node as the second tree node according to a preset step length along a direction of the comprehensive learning vector.

3. The path planning method of claim 1, wherein the second tree node is further grown in the following manner:
in response to the minimum distance between the third tree node and the obstacle being less than the preset distance threshold, growing a tree node as the second tree node according to the preset step length along the direction from the third tree node to the target sampling point.

4. The path planning method of claim 1, wherein constructing a second exploration tree starting from the end position comprises:
in response to determining that the second tree node collides with the obstacle, discarding the second tree node and growing the first tree node of the first exploration tree.

5. The path planning method of claim 4, wherein constructing a second exploration tree starting from the end position further comprises:
in response to determining that the second tree node does not collide with the obstacle, adding the second tree node to the node set of the second exploration tree.

6. The path planning method of claim 1, further comprising generating the target sampling point in an obstacle-free region; and generating the target sampling point in an obstacle-free region comprises:

generating a target sampling probability according to a uniform probability distribution;
in response to the target sampling probability being less than a first preset probability threshold, selecting the target tree node as the target sampling point; and
in response to the target sampling probability being greater than or equal to the first preset probability threshold, randomly selecting the target sampling point along the second tree node previously grown.

7. The path planning method of claim 1, wherein the first tree node is grown in the following manner:

determining a tree node nearest to a starting sampling point as a fourth tree node from a node set of the first exploration tree, wherein the starting sampling point is obtained by extending sampling along the first tree node previously grown; and
growing a tree node as the first tree node according to the preset step length along a direction from the fourth tree node to the starting sampling point.

8. The path planning method of claim 7, further comprising generating the starting sampling point in an obstacle-free region; and generating the starting sampling point in an obstacle-free region comprises:

   generating a starting sampling probability according to a uniform probability distribution;
   in response to the starting sampling probability being less than a second preset probability threshold, selecting a starting tree node as the starting sampling point from the node set of the second exploration tree, wherein the starting tree node is a tree node on the second exploration tree nearest to the first exploration tree; and
   in response to the starting sampling probability being greater than or equal to the second preset probability threshold, randomly selecting the starting sampling point along the first tree node previously grown.

9. The path planning method of claim 1, wherein constructing a first exploration tree starting from the starting position comprises:
   in response to determining that the first tree node collides with the obstacle, discarding the first tree node and growing the second tree node of the second exploration tree.

10. The path planning method of claim 9, wherein constructing a first exploration tree starting from the starting position further comprises:
    in response to determining that the first tree node does not collide with the obstacle, adding the first tree node to a node set of the first exploration tree.

11. The path planning method of any of claims 1 to 10, wherein connecting the first exploration tree and the second exploration tree to obtain a planned path of the moving object comprises:
    respectively connecting the first exploration tree and the second exploration tree according to a growth sequence of tree nodes, and connecting the first tree node and the second tree node to obtain the planned path of the moving object.

12. A path planning apparatus, comprising: a memory, a processor, and a computer program stored in the memory and executable by the processor, wherein the computer program, when executed by the processor, causes the processor to carry out the path planning method of any of claims 1 to 11.

13. A computer-readable storage medium, storing computer-executable instructions which, when executed by a processor, cause the processor to carry out the path planning method of any of claims 1 to 11.

S100

Acquire a motion space, a starting position, and an end position of a moving object, and information of an obstacle

S200

Construct a first exploration tree starting from the starting position and construct a second exploration tree starting from the end position in the motion space, where the first exploration tree and the second exploration tree grow toward each other according to the information of the obstacle

S300

When a distance between a first tree node grown on the first exploration tree and a second tree node grown on the second exploration tree being not greater than a preset step length, connect the first exploration tree and the second exploration tree to obtain a planned path of the moving object

FIG. 1

S400

Determine a tree node nearest to a starting sampling point as a fourth tree node from a node set of the first exploration tree, where the starting sampling point is obtained by extending sampling along the first tree node previously grown

S500

Grow a tree node as the first tree node according to the preset step length along a direction from the fourth tree node to the starting sampling point

FIG. 2

When it is determined that the first tree node collides with the obstacle, discard the first tree node and grow the second tree node of the second exploration tree

S210

## FIG. 3

When it is determined that the first tree node does not collide with the obstacle, add the first tree node to a node set of the first exploration tree

S220

## FIG. 4

Grow a random learning vector along the direction from the third tree node to the target sampling point

S230

Grow a targeted learning vector along the direction from the third tree node to the target tree node

S240

Add the random learning vector and the targeted learning vector to obtain a comprehensive learning vector

S250

Grow a tree node as the second tree node according to a preset step length along a direction of the comprehensive learning vector

S260

## FIG. 5

When the minimum distance between the third tree node and the obstacle is less than the preset distance threshold, grow a tree node as the second tree node according to the preset step length along the direction from the third tree node to the target sampling point

S270

FIG. 6

When it is determined that the second tree node collides with the obstacle, discard the second tree node and grow the first tree node of the first exploration tree

S280

FIG. 7

When it is determined that the second tree node does not collide with the obstacle, add the second tree node to the node set of the second exploration tree

S290

FIG. 8

Respectively connect the first exploration tree and the second exploration tree according to a growth sequence of tree nodes, and connect the first tree node and the second tree node to obtain the planned path of the moving object

S310

FIG. 9

FIG. 10

FIG. 11

Path

FIG. 12

FIG. 13

## INTERNATIONAL SEARCH REPORT

International application No.

**PCT/CN2023/077432**

### A. CLASSIFICATION OF SUBJECT MATTER

G05D1/02(2020.01)i;G01C21/20(2006.01)i

According to International Patent Classification (IPC) or to both national classification and IPC

### B. FIELDS SEARCHED

Minimum documentation searched (classification system followed by classification symbols)

IPC: B25J9, G05D, G01C

Documentation searched other than minimum documentation to the extent that such documents are included in the fields searched

Electronic data base consulted during the international search (name of data base and, where practicable, search terms used)

CNTXT, ENTXT, CNKI, DWPI, CNABS, 互联网, Internet: 路径规划, 导航, 快速扩展树, 节点, 障碍, 采样, 搜索, 探索, fast, random, search, tree, algorithm, rrt, path, planning, obstacle

### C. DOCUMENTS CONSIDERED TO BE RELEVANT

| Category* | Citation of document, with indication, where appropriate, of the relevant passages | Relevant to claim No. |
|---|---|---|
| A | CN 113934206 A (ZHEJIANG UNIVERSITY OF SCIENCE AND TECHNOLOGY) 14 January 2022 (2022-01-14) description, pages 3-12 | 1-13 |
| A | CN 113204238 A (WUHAN UNIVERSITY OF TECHNOLOGY) 03 August 2021 (2021-08-03) entire document | 1-13 |
| A | CN 109839110 A (ZHEJIANG UNIVERSITY) 04 June 2019 (2019-06-04) entire document | 1-13 |
| A | CN 112462785 A (XIAMEN UNIVERSITY) 09 March 2021 (2021-03-09) entire document | 1-13 |
| A | CN 112923944 A (DILU TECHNOLOGY CO., LTD.) 08 June 2021 (2021-06-08) entire document | 1-13 |
| A | CN 110509279 A (BEIJING UNIVERSITY OF TECHNOLOGY) 29 November 2019 (2019-11-29) entire document | 1-13 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2023** | **09 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2023/077432** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2011106306 A1 (SAMSUNG ELECTRONICS CO., LTD.) 05 May 2011 (2011-05-05)<br>entire document | 1-13 |
| A | US 2012277907 A1 (KIM CHYON HAE; SUGANO SHIGEKI; YAMAZAKI SHOTA; WASEDA UNIVERSITY; HONDA MOTOR CO., LTD.) 01 November 2012 (2012-11-01)<br>entire document | 1-13 |
| A | JP 2009211571 A (SONY CORP.) 17 September 2009 (2009-09-17)<br>entire document | 1-13 |

Form PCT/ISA/210 (second sheet) (July 2022)

**INTERNATIONAL SEARCH REPORT**
**Information on patent family members**

International application No.

**PCT/CN2023/077432**

| Patent document cited in search report | | | Publication date (day/month/year) | Patent family member(s) | | | Publication date (day/month/year) |
|---|---|---|---|---|---|---|---|
| CN | 113934206 | A | 14 January 2022 | None | | | |
| CN | 113204238 | A | 03 August 2021 | None | | | |
| CN | 109839110 | A | 04 June 2019 | CN | 109839110 | B | 24 July 2020 |
| CN | 112462785 | A | 09 March 2021 | CN | 112462785 | B | 03 June 2022 |
| CN | 112923944 | A | 08 June 2021 | None | | | |
| CN | 110509279 | A | 29 November 2019 | CN | 110509279 | B | 08 December 2020 |
| US | 2011106306 | A1 | 05 May 2011 | KR | 20110048330 | A | 11 May 2011 |
| | | | | KR | 101667031 | B1 | 17 October 2016 |
| | | | | US | 8483874 | B2 | 09 July 2013 |
| US | 2012277907 | A1 | 01 November 2012 | JP | 2012234262 | A | 29 November 2012 |
| | | | | JP | 5774361 | B2 | 09 September 2015 |
| | | | | US | 8825207 | B2 | 02 September 2014 |
| JP | 2009211571 | A | 17 September 2009 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210156637